# EUROPÄISCHE PATENTSCHRIFT

(11) **EP 1 323 767 B1**
(45) Veröffentlichungstag und Bekanntmachung des Hinweises auf die Patenterteilung: **12.03.2008**
(21) Anmeldenummer: 02028627.4
(22) Anmeldetag: 20.12.2002
(51) Int. Cl.: C08G 77/28, C08G 77/26, C08G 77/20, H01M 8/00, B01D 71/70, H01M 8/10, B01D 71/00

(54) **Protonenleitfähige Membranen/Schichten und Verfahren zu deren Herstellung**
Proton conducting membranes or layers and process for their fabrication
Membranes ou couches à conduction protonique et procédé pour leur fabrication

(30) Priorität: 21.12.2001 DE 10163518
(43) Veröffentlichungstag der Anmeldung: 02.07.2003
(73) Patentinhaber: Fraunhofer-Gesellschaft zur Förderung der angewandten Forschung e.V., 80686 München (DE)
(72) Erfinder: Jacob, Stephane, 97082 Würzburg (DE); Popall, Michael, 97072 Würzburg (DE); Fröhlich, Lothar, 97072 Würzburg (DE); Kahlenberg, Frank, 59929 Brilon (DE); Olma, Konrad, 97204 Höchberg (DE)

(56) Entgegenhaltungen:
- FR-A- 2 670 212
- US-A- 4 505 985

## Beschreibung

Die vorliegende Erfindung betrifft protonenleitfähige Schichten, insbesondere Membranen, auf Basis von cokondensierten styryl- und sulfonylfunktionalisierten Alkoxysilanen sowie ein Verfahren zum Herstellen von solchen Schichten/Membranen.

Das Interesse an Polymerelektrolyt-Membran-Brennstoffzellen (PEMFC) für mobile Anwendungen ist in den letzten Jahren stark gestiegen. Die meisten PEM-Brennstoffzellen-Systeme benutzen noch Polymerelektrolyte, die zu der Nafion® Familie von perfluorierten sulfonierten lonomeren gehören und die von Du Pont de Nemours hergestellt werden. Zu der Klasse von perfluorierten sulfonierten Materialen gehören auch FlemionTM von Asahi Glass und AciplexTM von Asahi Chemical. Im Jahre 1987 wurde von Ballard Advanced Materials Corp. eine Brennstoffzelle mit einer Membran der Dow Chemical Company entwickelt, die eine Verbesserung der PEMFC-Leistung brachte. Sie war von dem selben Typ wie die Nafion® Membran, hatte aber eine kürzere Seitenkette, wodurch der SO₃H-Anteil und damit die Leitfähigkeit des Polymers erhöht wurden. Zur gleichen Zeit versuchte Du Pont seine Membran durch Reduktion der Membrandicke und durch eine Steigerung des SO₃H-Anteils aufzuwerten. Diese Polymere haben jedoch noch einige Nachteile, wie z.B. hohe Kosten, was bisher eine Massenproduktion behinderte.

In der Literatur findet man verschiedene Polymerentwicklungen, die versuchen, diesen Nachteil zu beseitigen. Eine Möglichkeit die Kosten zu senken, ist die Herstellung eines teilfluorierten Polymers. So startete z.B. Ballard Ende der achtziger Jahre ein Programm zur Entwicklung kostengünstiger Polymer-Elektrolyte für Brennstoffzellen-Anwendungen. Dies führte zu einem Polymerkomposit, basierend auf sulfoniertem α, β, β-Trifluorstyrol und Polytetrafluorethylen (siehe z.B. US Patent 5,985,942 und weitere). Die Hoechst AG entwickelte während der neunziger Jahre sulfonierte Poly(aryletherketone) (EP 574791 A1); jedoch war die Leistung der Brennstoffzellen mit solchen Membranen noch zu gering. Eine andere Technik, Protonen-Austauscher-Membranen zu entwickeln, basiert auf der Kopplung von Styrol (US Patente 5,994,426, 5,656,386, F.N. Büchi et al., J. Electrochem. Soc. 142, (1995) 3044) oder α, β, β-Trifluorstyrol (WO 99/24497) über ein fluoriertes Polymer, wie Polytetrafluorethylen, und dem anschließenden Sulfonieren des Polymers. Die elektrochemischen und mechanischen Eigenschaften dieser Membranen sind jedoch ungenügend und müssten für eine Verwendung in Brennstoffzellen noch verbessert werden.

Bei Direkt-Methanol-Brennstoffzellen (DMFC) mit Nafion-Membranen besteht neben der Kostenproblematik das Problem, daß das Nafion nur eine Arbeitstemperatur von maximal 90 °C erlaubt. Bei höheren Temperaturen verlieren die Membranen das an die -SO₃H-Gruppen komplexierte Wasser, was zu einem Rückgang der Protonenleitfähigkeit führt. Außerdem haben diese Membranen einen hohen Methanol Crossover (d.h. Methanoldurchlässigkeit). Sie sind deswegen nicht gut geeignet für DMFC-Anwendungen.

Um dieses Problem zu mindern, wurde in den letzten Jahren eine ganze Reihe von wasserfreien Polymer-Protonenleitern entwickelt, die aus einer Komplexierung von verschiedenen Polymeren mit starken Säuren wie Schwefel- oder Phosphorsäure entstehen. Zu dieser Kategorie Polymere gehören z. B. Poly(ethylenimine), siehe D. Schoolmann et al., Electrochim. Acta 37 (1992), 1619, und Poly(benzimidazole), siehe US Patente 5,716,727, 5,525,436, J.S. Wainright et al. in "New Materials for Fuel Cell Systems II, O. Savadogo und P.R. Roberge Eds., 1997, 808, und J.S. Wainright et al., J. Electrochim. Soc. 142 (1995), L121. Allerdings sind die thermische Stabilität und die Redox-Stabilität wegen der hohen Säurekonzentration und des Oxidationspotentials der Säuren oft limitiert. Auch hier wurde u. a. versucht, die Nafion-Membran durch die Benutzung einer Drei-Schicht-Membran (US Patent 5,981,097) oder durch eine optimierte Katalysator-Schicht (X. Ren et al., Polym. Mater. Sci. Eng. 80 (1999), 601, X. Ren et al., J. Electrochem. Soc. 143 (1996), L12) für die Methanoloxidation zu verbessern.

Ende der neunziger Jahre wurden neue Systeme studiert, in denen die starken Säuren z.B. durch sulfonierte Poly(aryletherketone) und Heterocyclen wie Imidazole oder Pyrazole ersetzt sind (K.-D. Kreuer et al., Electrochim. Acta 43, 1281 (1998). Letztere Moleküle spielen die Rolle eines Lösungsmittels für die sauren Protonen der Polymere. Gute Protonenleitfähigkeit kann deswegen mit Systemen erreicht werden, die aus solchen Heterocyclen und protonenleitenden Polymeren bestehen.

Auf der Basis von hydrolytisch kondensierten und über organische Gruppen polymerisierten Silanen hergestellte Membranen, die auch protonenleitend sein können, sind z. B. aus dem US-Patent 4,505,955 bekannt. In jüngster Zeit wurden außerdem protonenleitende, anorganisch-organische Polymere auf einer solchen Basis (ORMOCER^{®}e) hergestellt, in denen sulfonierte und sulfonamidhaltige Gruppen in das anorganische Netzwerk eingebunden sind (siehe L. Depre, et al., Mat. Res. Soc. Symp. Proc. 575 (2000) 253 und L. Depre et al., Electrochim. Acta 45 (2000), 137). Dies wurde realisiert durch den Einsatz einer Mischung von funktionalisierten Alkoxysilanen mit sulfonierten Gruppen, z.B. (3-Sulfonyl)-1-propenyltrimethoxysilan, Alkoxysilanen mit Sulfonamidgruppen, z.B. 2-(4-Sulfamoylphenyl)-ethyltrimethoxysilan, und Alkoxysilanen mit polymerisierbaren organischen Gruppen wie der Epoxygruppe im 3-(Glycidoxypropyl)methyldimethoxysilan (GLYMO). Eine hydrolytische Kondensation, gefolgt von einer organische Polymerisation führte zu der protonenleitenden Membran. In einer so hergestellten Membran wurde eine Leitfähigkeit von 1.4 10⁻² S/cm (12% Wasser, Raumtemperatur) erreicht. Solche Membranen verlieren aber ihre Leitfähigkeit über 90°C und zeigen wenig Redoxstabilität, eine Grundvoraussetzung für Membranen im Brennstoffzellen.

Aufgabe der vorliegenden Erfindung ist es, eine protonenleitende Schicht/Membran mit ausgezeichneten Leitungseigenschaften bereitzustellen, die Arbeitstemperaturen oberhalb von 90°C ermöglicht und deren Redoxstabilität verbessert ist. Bevorzugt soll die Erfindung Membranen liefern, die bei Temperaturen im Bereich von etwa 140°C gute Leitfähigkeitseigenschaften zeigen.

Es hat sich erfindungsgemäß gezeigt, daß Schichten oder Membranen auf Basis von hydrolytisch kondensierten Silanen gute Leitfähigkeitseigenschaften bei Temperaturen deutlich über 90°C haben können, wenn sie styrylfunktionalisierte Silane als Netzwerkbildner enthalten. Diese haben sich überraschenderweise sowohl als temperaturstabiler und auch als redoxstabiler erwiesen als bisherige Netzwerkbildner.

Styrylsilane, wie in der vorliegenden Anmeldung eingesetzt, sind bekannt, z.B. aus der Anwendung in Farbpartikeln, sauerstoffdurchlässigen Membranen oder elektrophotographischen Materialen. Erfindungsgemäß sind insbesondere Styrylalkoxysilane einsetzbar. Allerdings lag die Ausbeute bei der Synthese solcher Verbindungen bisher unter 40%, weil die Vinylgruppe während der Synthese zu Polymerisationsreaktionen neigt und Nebenprodukte gebildet werden. Den Erfindern ist es jedoch gelungen, die Ausbeutung dieses Verfahrens deutlich zu verbessern. Dabei werden styrylfunktionalisierte Silane wie bekannt über ein Grignard-Reagenz synthetisiert, wobei das Verfahren in zwei getrennten Schritten unter Verwendung von chlorfreien Alkoxysilanen als Silan-Ausgangskomponente abläuft. Wesentlich ist dabei, dass die Herstellung der Grignard-Verbindung in Abwesenheit des Silans erfolgt, und zwar zur Unterdrückung der Vinylgruppenpolymerisation bei Temperaturen zwischen etwa 40-55°C. Deshalb sollte das hierfür verwendete Lösungsmittel zumindest im wesentlichen aus Ether mit Tetrahydrofuran im Mischungsverhältnis von 30:70 bis 70:30 (v:v), vorzugsweise von 50:50 bis 60:40 bestehen. Die spätere Umsetzung der Grignard-Verbindung mit dem als Edukt gewählten Silan sollte bei Temperaturen von nicht über 20°C, vorzugsweise nicht über 15°C erfolgen, wobei dasselbe oder ein ähnliches Lösungsmittel verwendbar ist und erst nach Umsetzung des größten Teiles des Reaktionsansatzes zur Vervollständigung der Umsetzung eine Temperaturerhöhung auf etwa 40°C vorgenommen werden kann.

Die erfindungsgemäßen Schichten/Membranen werden aus mindestens drei Bestandteilen gebildet, nämlich aus (1) sulfonsäuregruppenhaltigen Silanen, (2) styrylfunktionalisierten Silanen und (3) mindestens einen stickstoffhaltigen Heterocyclus, eine Aminfunktion oder eine Sulfonamidfunktion tragenden Silanen. Alle drei Bestandteile können aus einem oder mehreren Silanen der genannten Art bestehen. Außerdem können weitere Komponenten vorhanden sein.

Zumindest die voranstehend unter (1) und (3) genannten Silane besitzen zumindest eine Gruppe, die unter hydrolytischen Bedingungen abgespalten werden kann, so dass die Verbindungen einer hydrolytischen Kondensation zugänglich sind.

Die für die Erfindung verwendbaren sulfonsäuregruppenhaltigen Silane werden vorzugsweise ausgewählt unter Silanen der Formel (I):

PₐR¹_{b}SiX_{4-a-b} (I)

worin P die Bedeutung HOSO₂-R- besitzt, worin R ein aliphatischer oder aromatischer organischer Rest, vorzugsweise eine ggf. substituierte Alkylen-, Alkenylen-, oder Phenylengruppe ist oder umfaßt, R¹ eine über Kohlenstoff am Silicium gebundene Gruppe darstellt, z.B. ggf. substituiertes Alkyl, Alkenyl, Alkinyl, Aryl, Alkylaryl oder Arylalkyl, X eine unter hydrolytischen Bedingungen abdissoziierende Gruppe ist, a 1 oder 2 ist, b 0, 1 oder 2 ist und a+b zusammen 1, 2 oder 3 sind. P ist über den Rest R, vorzugsweise über eine vorhandene Alkylen-, Alkenylen, oder Phenylengruppe am Silicium gebunden; wenn R eine aliphatische Gruppe ist, besitzt diese vorzugsweise 1-6 Kohlenstoffatome, stärker bevorzugt 2-4 Kohlenstoffatome. Ganz besonders bevorzugt ist sie Propylen oder Propenylen. R¹ kann z.B. Methyl, Ethyl, ein Propylrest (n- oder iso-) oder ein Butylrest (n-, iso- oder t-) sein. Der hydrolyseempfindliche Rest X kann Wasserstoff, Halogen, Alkoxy, Aryloxy oder NR²₂ mit R² gleich Wasserstoff oder Niederalkyl sein und ist vorzugsweise C₁-C₁₂-Alkoxy, ganz besonders bevorzugt C₁-C₄-Alkoxy. Bevorzugt hat a die Bedeutung 1 und b die Bedeutung 0.

Die styrylgruppenhaltigen Silane der vorliegenden Erfindung werden vorzugsweise ausgewählt unter solchen der allgemeinen Formel (II)

(St)ₐR¹_{b}SiX_{4-a-b} (II)

worin (St) ein fakultativ substituierter Styrylrest ist, R¹ eine Gruppe ist, die über ein Kohlenstoffatom am Silicium gebunden ist, beispielsweise ggf. substituiertes Alkyl, Alkenyl, Alkinyl, Aryl, Alkylaryl oder Arylalkyl, X ein hydrolyseempfindlicher Rest ist, a 1, 2 oder 3 bedeutet, b 0, 1, 2 oder 3 bedeutet und a+b zusammen 1, 2, 3 oder 4 sind. (St) kann ggf. mit einer über Kohlenstoff gebundenen Gruppe, beispielsweise Alkyl, Aryl, Alkylaryl oder Arylalkyl, substituiert sein. In bevorzugten Ausgestaltungen ist a+b nicht mehr als 3, d.h. enthält das Silan der Formel (II) eine (oder auch mehrere) hydrolysierbare Gruppe X. In diesen Fällen kann das styrylgruppenhaltige Silan nämlich mit den oder einem anderen Silan(en) cokondensiert werden. Bevorzugt ist weiterhin (St) p-Vinylphenyl. R¹ kann z.B. Methyl, Ethyl, ein Propylrest (n- oder iso-) oder ein Butylrest (n-, iso- oder t-) sein und ist vorzugsweise Methyl oder Ethyl. Der abhydrolysierbare Rest X kann Wasserstoff, Halogen, Alkoxy, Aryloxy oder NR²₂ mit R² gleich Wasserstoff oder Niederalkyl sein und ist vorzugsweise C₁-C₆-Alkoxy, ganz besonders bevorzugt C₁-C₄-Alkoxy. Bevorzugt hat a die Bedeutung 1 oder 2 und b die Bedeutung 0 oder 1.

Die mindestens einen stickstoffhaltigen Heterocyclus, eine Aminfunktion oder eine Sulfonamidfunktion tragenden Silane werden vorzugsweise ausgewählt unter solchen der allgemeinen Formel (III)

(Q)ₐR¹_{b}SiX_{4-a-b} (III)

worin die Reste R¹ und X und die Indices a und b wie für Formel (I) definiert sind, (Q) Het-R- oder NH₂SO₂-R- oder NHR²-R- sein kann, wobei R und R² wie für Formel (I) oben definiert sind und Het ein im Ring stickstoffhaltiger Heterocyclus ist. Der Rest R der Gruppe Q ist vorzugsweise über eine vorhandene Alkylen-, Alkenylen oder Phenylengruppe am Silicium gebunden; wenn R eine aliphatische Gruppe ist, besitzt diese vorzugsweise 1-6 Kohlenstoffatome, stärker bevorzugt 2-4 Kohlenstoffatome. Ganz besonders bevorzugt ist sie Propylen oder Propenylen. R¹ kann z.B. Methyl, Ethyl, ein Propylrest (n- oder iso-) oder ein Butylrest (n-, iso- oder t-) sein. (Het) kann beispielsweise ein fünf- oder sechsgliedriger Ring sein, der ein oder zwei Stickstoffatome oder ein Stickstoff- und ein Sauerstoff- oder Schwefelatom enthält. Auch kondensierte Ringsysteme sind möglich. Die Stickstoffatome können als -N=-Gruppen oder als -NR³-Gruppen mit R³ vorzugsweise gleich Wasserstoff vorliegen. Beispiele für geeignete Heterocyclen sind Pyrrol oder Imidazol. Der hydrolyseempfindliche Rest X kann Wasserstoff, Halogen, Alkoxy, Aryloxy oder NR²₂ mit R² gleich Wasserstoff oder Niederalkyl sein und ist vorzugsweise C₁-C₁₂-Alkoxy, ganz besonders bevorzugt C₁-C₄-Alkoxy. Bevorzugt hat a die Bedeutung 1 und b die Bedeutung 0.

Die voranstehend beschriebenen Silane können prinzipiell in beliebiger Abfolge zusammengegeben und, ggf. in Gegenwart weiterer Komponenten wie z.B. Silanen der Formel (IV)

R⁴ₐSiX₄₋₁ (IV)

worin X die für die voranstehende Formel (I) angegebene Bedeutung hat, R⁴ ggf. substituiertes Alkyl, Alkenyl, Alkinyl, Aryl, Alkylaryl oder Arylalkyl ist und eine ganze Zahl von 0 bis 4 bedeutet, und/oder Verbindungen der Formel (VI)

M(OR⁵)_{c} (V)

worin M ein Metall ist, das in wasserhaltigen Systemen Alkoxygruppen ausbilden kann, insbesondere Ge, Sn, Pb, Ti oder Zr, wobei c 4 bedeutet, oder B oder Al, wobei c 3 bedeutet, und R⁵ ein Alkyl oder Alkenyl, vorzugsweise ein C₁-C₄ Alkyl darstellt, hydrolysiert und kondensiert werden, wobei üblicherweise ein Katalysator zugesetzt wird. Außderdem können nach Bedarf weitere Zusätze wie Füllstoffe, Pigmente, Polymerisationsinitiatoren (z.B. für eine UV- oder eine thermisch initiierte Polymerisation) etc. zugegeben werden.

Gemäß einer ersten Ausgestaltung der Erfindung ist es bevorzugt, dass die Silane (1) und (3) zunächst getrennt zumindest teilweise hydrolysiert werden und erst dann miteinander vermischt werden, wenn sie bereits im wesentlichen durchkondensiert sind. Der Bestandteil (2), also das oder die styrylfunktionalisierte(n) Silan(e), kann entweder ebenfalls ggf. getrennt hydrolysiert/kondensiert und dann erst mit den Kondensaten von (1) und (3) vermischt werden; bevorzugt ist es jedoch, dass dieser Bestandteil entweder einem oder, stärker bevorzugt, anteilig beiden der Bestandteile (1) und(3) zugesetzt und mit diesen ggf. cohydrolysiert und cokondensiert wird.

Dementsprechend wird vorzugsweise ein erstes Sol (A) durch eine vorzugsweise im sauren Bereich ablaufende hydrolytische Kondensation (Sol-Gel-Verfahren) unter Verwendung mindestens eines sulfonsäuregruppenhaltigen Silans und mindestens eines styrylgruppenhaltigen Silans, das vorzugsweise mindestens eine hydrolysierbare Gruppe aufweist, hergestellt. Auch ein zweites Sol (B) wird durch hydrolytische Kondensation (Sol-Gel-Verfahren) erhalten, und zwar unter Verwendung mindestens eines einen stickstoffhaltigen Heterocyclus, eine Aminfunktion oder eine Sulfonamidfunktion tragenden Silans sowie desselben oder eines anderen Styrylgruppen aufweisenden, ebenfalls vorzugsweise mindestens eine hydrolysierbare Gruppe X enthaltenden Silans wie für (A) genannt, ggf. in Gegenwart weiterer Bestandteile. Die Hydrolyse/Kondensation dieser Komponente (B) wird vorzugsweise basisch katalysiert. Die hydrolytische Kondensation beider Systeme erfolgt in der Regel in einem geeigneten Lösungsmittel, z.B. einem Alkohol wie Methanol, dem Wasser beigemischt sein kann.Die beiden hydrolytisch kondensierten Komponenten werden gemischt, und das resultierende Sol wird vorzugsweise noch eine Weile gerührt.

In einer zweiten bevorzugten Ausgestaltung der Erfindung wird das sulfonsäuregruppenhaltige Silan zuerst hydrolysiert und kondensiert. Danach werden das styrylfunktionalisierte Silan und das Silan, das einen stickstoffhaltigen Heterocyclus, eine Aminfunktion oder eine Sulfonamidfunktion trägt, mit der Menge an Wasser, die für die Hydrolyse und Co-Kondensation erforderlich ist, zugegeben.

Die für die hydrolytische Kondensation benötigten oder zumindest günstigen Zeiten liegen im allgemeinen im Bereich von einigen Stunden bis zu einigen, oft nur wenigen Tagen.

Es ist in vielen Fällen besonders günstig, wenn die Anzahl der Sulfonsäuregruppen und die der Sulfonamid-, Amin- bzw. Heterocyclus-Stickstoff-Gruppen (letztere, soweit sie basisch sind) in der Mischung in etwa gleich ist, oder aber die Anzahl der Sulfonsäuregruppen überwiegt. Denn die Sulfonsäuregruppen wirken als Protonendonoren, und die Sulfonamid-, die Amin- und die basischen Heterocyclus-Stickstoff-Gruppen wirken als Protonenakzeptoren. Damit wirkt die aus diesen Komponenten erzeugte Schicht protonenleitend. Die Menge an Styrylgruppen wird im wesentlichen in Abhängigkeit von den gewünschten mechanischen Eigenschaften der zu erzeugenden Membran gewählt. Geeignet ist beispielsweise eine Menge von 20-60 Mol-%, bezogen auf die Menge der Siliciumatome. Bevorzugt sind 30-50 Mol-%, ganz besonders etwa 40 Mol-%.

Nach Abschluß der Kondensation wird vorhandenes Lösungsmittel ggf. entfernt, z.B. abdestilliert. Wenn es nötig ist, kann auch Lösungsmittel zugegeben werden oder ein Lösungsmittelaustausch stattfinden. Das resultiertende Harz kann bei Bedarf in geeigneter Weise gelagert werden, z.B. bei -20°C. Es besitzt in geeigneter Weise eine Viskosität, die sein Einfüllen in Formen, z.B. Teflon- oder Aluminiumformen, oder Ausstreichen/Aufrakeln oder sonstiges Aufbringen auf Substrate erlaubt. In einer solchen Form kann es günstigerweise durch thermische und/oder UV-Polymerisation der Styrylgruppen gehärtet werden. Thermisches Härten ermöglicht nicht nur den Start der organischen Polymerisation, sondern auch die Verflüchtigung von möglicherweise verbliebenem Lösungsmittel. Diese Variante kann daher, allein oder in Kombination mit UV-Polymerisation, in entsprechenden Fällen besonders gut geeignet sein. Für die UV-Polymerisation lassen sich Photoinitiatoren wie Irgacure 369 verwenden, und für die thermische Polymerisation thermische Initiatoren wie Dibenzoylperoxid. Bei thermischer Polymerisation kann ab etwa 70°C auch auf einen Initiator verzichtet werden, da sich ab etwa 50°C reaktive Radikale der Styrylgruppen zu bilden beginnen.

Die Leitfähigkeit der dabei entstehenden Schichten oder Membranen kann insbesondere dadurch noch verbessert werden, dass man ihnen vor oder nach der Vernetzung leitfähigkeitsverstärkende Substanzen zusetzt, die als Vehikel für den Protonentransport auf bzw. durch die Schicht bzw. Membran dienen können. Beispiele hierfür sind Substanzen wie Wasser oder Imidazol, die die Rolle eines Lösungsmittels für saure Protonen spielen können. Andere Beispiele lassen sich beispielsweise K. D. Kreuer et al., Electrochimica Acta 43, 1281 (1998) entnehmen. Manche dieser Flüssigkeiten, z.B. Wasser, können von der bereits organisch durchpolymerisierten Schicht oder Folie adsorbiert werden. Man kann sie daher je nach Wunsch vor oder nach der organischen Polymerisation zusetzen. Andere Substanzen, z.B. Imidazol, werden von der fertigen Schicht oder Membran nur noch zögernd oder gar nicht aufgenommen bzw. angelagert, so daß es sich empfiehlt, diese der Silanharz-Zusammensetzung vor der organischen Polymerisation zuzugeben. In bevorzugten Ausgestaltungen der Erfindung gibt man daher der Schicht oder Membran Gelegenheit, Wasser zu adsorbieren, z.B. in Form von Luftfeuchtigkeit, oder man setzt Imidazol zu, bevor, während oder nachdem das für die Hydrolyse/Kondensation verwendete Lösungsmittel entfernt wurde und bevor eine organische Vernetzung erfolgt.

### Beispiel 1

### Synthese von p-Vinylphenylmethyldiethoxysilan

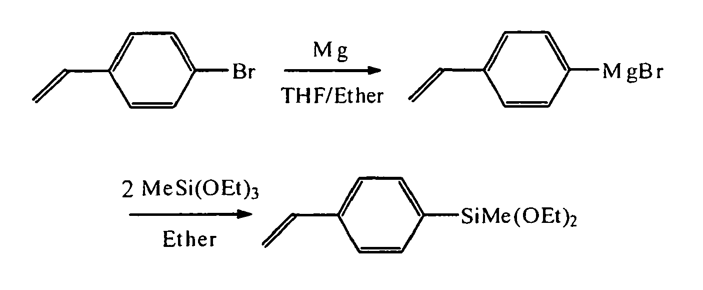

In einem Dreihalskolben unter Argon und mechanischer Rührung werden 11,7 g (480 mmol) Magnesiumspäne und einige Jodkristalle in 40 ml einer Lösung A (55% Diethylether, 45% Tetrahydrofuran) zusammen gemischt. Dann wird eine Lösung von 80,0 g (436 mmol) Bromstyrol gelöst in 210 ml des Lösungsmittelgemisches A langsam zugetropft, damit eine stetige exotherme Reaktion erreicht wird. Die Lösung wird unter Rückfluß gerührt. Nach Ablauf der exothermen Reaktion wird die Reaktionsmischung auf 2°C gekühlt und daraufhin 155,5 g (872 mmol) Methyltriethoxysilan in 160 ml trockenem Diethylether zugegeben; die Temperatur darf 15°C nicht überschreiten. Nach Ablauf der Substitutionsreaktion wird noch beim Raumtemperatur über Nacht gerührt. Ungefähr 200 ml n-Heptan werden nun zugegeben, damit die Magnesiumsalze ausfallen. Diese werden abfiltriert, 9,7 10⁻² g (0,44 mmol) 2,5-Di-tert.-butylhydrochinon dem Filtrat zugegeben, das Lösungsmittel im Rotationsverdampfer abgezogen und der Rückstand unter Vakuum fraktioniert destilliert. 72,5 g (307 mmol) des Produkt wurden erhalten. Ausbeute: 70,3 %, Siedepunkt: 65-66°C (0,05 mbar)

### Beispiel 2

### Synthese von p-Vinylphenyltrimethoxysilan, Bis-(p-vinylphenyl)-dimethoxysilan und Tris-(p-vinylphenyl)-methoxysilan

Styrylmagnesiumbromid wird wie in Beispiel 1 hergestellt. Dann werden 39,9 g (262 mmol) Tetramethoxysilan in 80 ml getrocknetem Diethylether zu der kalten Lösung (2 °C) des Grignard-Reagens' gegeben. Nach der Zugabe wird der Ansatz eineinhalb Stunden auf 45 °C erhitzt, damit die Substitution vollständig abläuft und anschließend bei Raumtemperatur über Nacht gerührt. Der Ansatz wird so wie im Beispiel 1 aufgearbeitet. Nach Entzug des Lösungsmittels erhält man 105,3g einer hellgelben Mischung. Die ²⁹Si-NMR-Spektroskopie zeigt, daß das Rohprodukt p-Vinylphenyltrimethoxysilan, Bis-(p-vinylphenyl)-dimethoxysilan und Tris-(p-vinylphenyl)-methoxysilan enthält.

Die mono- und disubstituierten Alkoxysilane werden destillativ vom Rohprodukt abgetrennt und gereinigt:
- Vinylphenyltrimethoxysilan (monosubstituiertes Alkoxysilan) 15,8 g (70,5 mmol), Ausbeute 34,9 %, Siedepunkt: 59-60°C (0,03 mbar)
- Bis-(p-vinylphenyl)-dimethoxysilan (disubstituiertes Alkoxysilan) 24,5 g (82,8 mmol) Ausbeute: 41,0 %
Gesamtausbeute: 75,9 %

Außerdem konnte im Rückstand spektroskopisch Tris-(p-vinyl-phenyl)-methoxysilan nachgewiesen werden.

### Beispiel 3

### Synthese einer protonenleitfähigen Membran

| | | |
|---|---|---|
| A | (3-Sulfonyl)-1-propenyltrimethoxysilan | 1,1 g (4,5 10⁻³ mol) |
| B | p-Vinylphenylmethyldiethoxysilan | 0,71 g (3.0 10⁻³ mol) |
| C | p-Vinylphenylmethyldiethoxysilan | 0,71 g (3,0 10⁻³ mol) |
| D | N-(3-Triethoxysilylpropyl)-4,5-dihydroimidazol | 1,2 g (4,5 10⁻³ mol) |

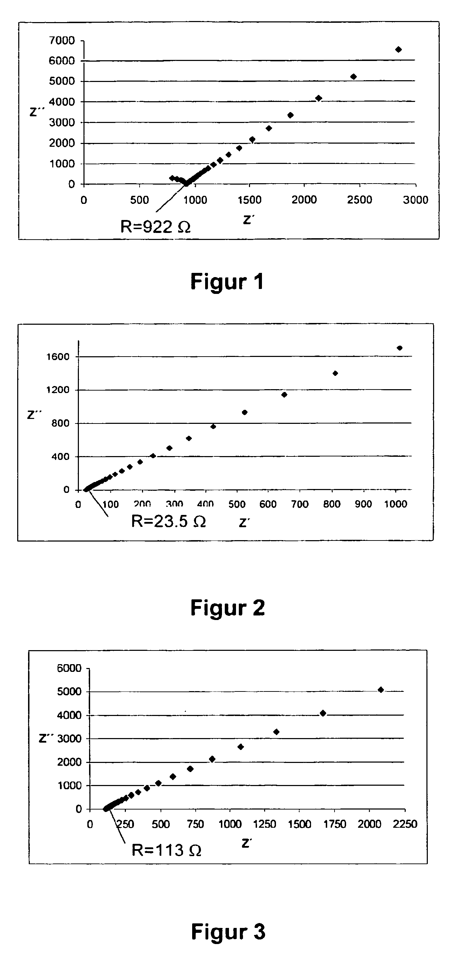

In einem ersten Kolben werden die Komponenten C,D und 2,4 g (7,5.10⁻² mol) Methanol bei Raumtemperatur zusammengemischt. Dazu wird 0,17 g (9,7.10⁻³ mol) Wasser zugegeben. Nach 24 Stunden werden die Komponenten A, B und 1,6g (5,0.10⁻² mol) Methanol bei RT zusammengemischt und dann 0,17 g (9,7.10⁻³ mol) Wasser zugegeben. Nach weiteren 24 Stunden werden die zwei Systeme zusammengemischt. Der Ansatz wird für weitere 24 Stunden gerührt. 1,2 g (1,8.10⁻² mol) Imidazol werden dann zugegeben und das Lösungsmittel entfernt (im Rotationsverdampfer). Nach dem Abrotieren wird ein mittelviskoses Harz erhalten, das nach Applikation als Schicht z. B. auf einer Nafion-Folie oder als Membran durch Einbringen in eine Teflonform im Ofen bei 65 °C gehärtet wird. Die Leitfähigkeit wird an einer Membran-Tablette mit einem "Schlumberger frequence response analyser 1260" gemessen. Das dabei erhaltene Nyquist-Diagramm gibt den Widerstand der Probe an; in **Figur 1** ist es für eine ausgewählte Probe mit einem Durchmesser von 1,15 cm und einer Dicke von 1,5 mm bei Raumtemperatur dargestellt: Der Widerstand beträgt 922 Ω, hieraus resultiert eine Leitfähigkeit von 1,6·10⁻⁴ S/cm. Der Widerstand bei 120°C beträgt 23,5 Ω, hieraus resultiert eine unerwartet hohe Leitfähigkeit von 6·10⁻³ S/cm. Dies läßt sich dem entsprechenden Diagramm entnehmen, das in **Figur 2** gezeigt ist. Mit der gleichen Zusammensetzung, aber ohne Zugabe von Imidazol, wurde eine Probe mit einer Leitfähigkeit von 7,6·10⁻⁷ S/cm bei Raumtemperatur erhalten. Wird der Probe statt Imidazol Wasser zugeführt (Absorption von 20 %), dann wird eine Leitfähigkeit von 2,2 10⁻⁴ S/cm bei Raumtemperatur erreicht.

### Beispiel 4

### Herstellung einer protonenleitfähigen Membran mit anderer Zusammensetzung

| | | |
|---|---|---|
| A | (3-Sulfonyl)-1-propenyltrimethoxysilan | 1,2 g (5,0 10⁻³ mol) |
| B | p-Vinylphenylmethyldiethoxysilan | 0,39 g (1,7 10⁻³ mol) |
| C | p-Vinylphenylmethyldiethoxysilan | 0,66 g (2,8 10⁻³ mol) |
| D | N-(3-Triethoxysilylpropyl)-4,5-dihydroimidazol | 0,46 g (1.7 10⁻³ mol) |

Diese Membran wurde so wie in dem Beispiel 3 hergestellt. Der Widerstand einer ausgewählten Probe (Durchmesser: 1,15 cm, Dicke: 0,12 cm) mit einem Gehalt von 1,02 g (1,5.10-2 mol) Imidazol beträgt 113 Ω, hieraus resultiert eine unerwartet hohe Leitfähigkeit von 1,0.10-3 S/cm bei Raumtemperatur. Das Nyquist-Diagramm dieser Probe ist in **Figur 3** dargestellt.

### Beispiel 5

### Synthese einer protonenleitfähigen Membran nach einem alternativen Verfahren

| | | |
|---|---|---|
| A | (3-Sulfonyl)-1-propenyltrimethoxysilan | 1,1 g (4,5 10⁻³ mol) |
| B | p-Vinylphenylmethyldiethoxysilan | 0,44 g (1,9 10⁻³ mol) |
| C | N-(3-Triethoxysilylpropyl)-4,5-dihydroimidazol | 0,31 g (1,1 10⁻³ mol) |

Im ersten Schritt wurde A mit 1,4 g (4,5 10⁻² mol) Methanol bei Raumtemperatur gerührt. 0,12 g (6,7 10⁻³ mol) Wasser wurden zugesetzt. 24 Stunden später wurden B, C, 0,96 g (3,0 10⁻² mol) Methanol und 7,1 10⁻² g (3,9 10⁻³ mol) Wasser zugegeben.

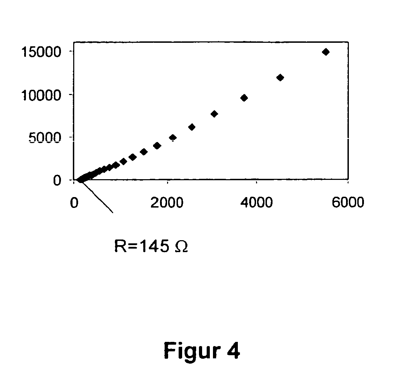

Die Reaktionsmischung wurde 6 Tage lang gerührt. Dann wurden 0,95 g (1,3 10⁻² mol) Imidazol zugegeben, und das Solvens wurde bei 35°C unter Vakuum entfernt. Nach dem Verdampfen des Solvens erhielt man ein mittelviskoses Harz, dem ein Starter für die Styrol-UV-Polymerisation zugegeben wurde. Das Harz wurde in Aluminiumformen gegeben oder alternativ wurde ein Substrat, z.B. eine Nafion ® Folie, damit beschichtet. Eine Vorhärtung erfolgte für 2 Stunden bei 70°C; danach wurde 2 min lang UVpolymerisiert. **Figur 4** zeigt das Nyquist-Diagramm bei Raumtemperatur für eine ausgewählte Probe mit einem Durchmesser von 1,15 cm und einer Dicke von 400 µm: Der Widerstand beträgt 145 Ω, d.h., die Probe besitzt eine Leitfähigkeit von 2,7 10⁻⁴ S/cm. Bei 115°C mißt man einen Widerstand von 3,9 Ω, die Probe hat dort also eine Leitfähigkeit von 1,0 10⁻² S/cm.

## Patentansprüche

1. Silanharz-Zusammensetzung, erhältlich durch zumindest teilweise hydrolytische Kondensation mindestens der folgenden Bestandteile:
(1) einem oder mehreren sulfonsäuregruppenhaltigen Silan(en) mit mindestens einer Gruppe, die unter hydrolytischen Bedingungen abgespalten werden kann,
(2) einem oder mehreren styrylfunktionalisierten Silan(en) und
(3) einem oder mehreren einen stickstoffhaltigen Heterocyclus, eine Aminfunktion oder eine Sulfonamidfunktion tragenden Silan(en) mit mindestens einer Gruppe, die unter hydrolytischen Bedingungen abgespalten werden kann, und
Vermischen der Bestandteile vor, während oder nach der hydrolytischen Kondensation.

2. Silanharz-Zusammensetzung nach Anspruch 1, worin
(1) die sulfonsäuregruppenhaltigen Silane ausgewählt sind unter Silanen der Formel (I):
PₐR¹_{b}SiX_{4-a-b} (I)
worin P die Bedeutung HOSO₂-R- besitzt, wobei R ein aliphatischer oder aromatischer organischer Rest ist oder einen solchen umfaßt und P über diesen am Silicium gebunden ist, R¹ eine über Kohlenstoff am Silicium gebundene Gruppe darstellt, X eine hydrolyseempfindliche Gruppe ist, a 1 oder 2 ist, b 0, 1 oder 2 ist und a+b zusammen 1, 2 oder 3 sind, und/oder
(2) die styrylgruppenhaltigen Silane ausgewählt sind unter solchen der allgemeinen Formel (II)
(St)ₐR¹_{b}SiX_{4-a-b} (II)
worin (St) ein fakultativ substituierter Styrylrest ist, die Reste R¹ und X wie in Formel (I) definiert sind, a 1, 2 oder 3 bedeutet, b 0, 1, 2 oder 3 bedeutet und a+b zusammen 1, 2, 3 oder 4 sind, und/oder
(3) die mindestens einen stickstoffhaltigen Heterocyclus, eine Aminfunktion oder eine Sulfonamidfunktion tragenden Silane ausgewählt sind unter solchen der allgemeinen Formel (III)
(Q)ₐR¹_{b}SiX_{4-a-b} (III)
worin die Reste R¹ und X und die Indices a und b wie in Formel (I) definiert sind, (Q) Het-R- oder NH₂SO₂-R- oder NHR²-R- ist, wobei R wie in Formel (I) oben definiert ist, R² Wasserstoff oder Niederalkyl bedeutet und Het ein im Ring stickstoffhaltiger Heterocyclus ist.

3. Silanharz-Zusammensetzung nach Anspruch 2, worin zumindest einer der nachstehenden Reste und Indices in den Formeln (I), (II) bzw. (III) die folgende Bedeutung hat:
(St) ist p-Vinylphenyl
Het ist ein ggf. substituierter Pyrrol-, Imidazol- oder Dihydroimidazolrest,
R ist eine ggf. substituierte Alkylen-, Alkenylen- oder Phenylengruppe
R¹ ist ein substituiertes Alkyl, Alkenyl, Alkinyl, Aryl, Alkylaryl oder Arylalkyl, bevorzugt Methyl, Ethyl, n- oder i-Propyl oder n-, i- oder t-Butyl,
X ist Wasserstoff, Halogen, Alkoxy, Aryloxy oder NR² mit der für Formel (III) angegebenen Bedeutung von R², darunter vorzugsweise Alkoxy und ganz besonders bevorzugt C₁-C₄-Alkoxy,
a ist 1, im Falle der Formel (II) oder auch 2
b ist 0 oder 1.

4. Silanharz-Zusammensetzung nach Anspruch 3, worin
(1) die sulfonsäuregruppenhaltigen Silane der Formel (I) ausgewählt sind unter (ω-Sulfonyl)-1-alkyl- oder -alkenyl-trialkoxysilanen,
(2) die styrylgruppenhaltigen Silane der Formel (II) ausgewählt sind unter p-Vinylphenylalkyldialkoxysilanen und
(3) die mindestens einen stickstoffhaltigen Heterocyclus, eine Aminfunktion oder eine Sulfonamidfunktion tragenden Silane der Formel (III) ausgewählt sind unter N-(Trialkoxysilylalkyl oder -alkenyl)-4,5-dihydroimidazolen und 2-(Trialkoxysilylalkyl- oder -alkenyl)imidazolen.

5. Silanharz-Zusammensetzung nach einem der voranstehenden Ansprüche, erhältlich durch die folgenden Schritte
(a) zumindest teilweise erfolgendes Hydrolysieren und Kondensieren mindestens eines sulfonsäuregruppenhaltigen Silans wie in einem der Ansprüche 1 bis 4 definiert,
(b) Zugeben mindestens eines styrylfuntionalisierten Silans, wie in einem der Ansprüche 1 bis 4 definiert, und mindestens eines einen stickstoffhaltigen Heterocyclus, eine Aminfunktion oder eine Sulfonamidfunktion tragenden Silans, wie in einem der Ansprüche 1 bis 4 definiert zu dem (Teil-)Hydrolysat/(Teil-)Kondensat gemäß (a) und Fortsetzen der Hydrolyse und Kondensation der Mischungsbestandteile.

6. Silanharz-Zusammensetzung nach einem der Ansprüche 1 bis 4, erhältlich durch die folgenden Schritte:
(a) zumindest teilweise erfolgendes Hydrolysieren und Kondensieren einer Mischung (A), bestehend aus oder enthaltend mindestens ein sulfonsäuregruppenhaltiges Silan wie in einem der Ansprüche 1 bis 4 definiert und mindestens ein styrylfuntionalisiertes Silan wie in einem der Ansprüche 1 bis 4 definiert,
(b) zumindest teilweise erfolgendes Hydrolysieren und Kondensieren einer Mischung (B), bestehend aus oder enthaltend mindestens ein einen stickstoffhaltigen Heterocyclus, eine Aminfunktion oder eine Sulfonamidfunktion tragendes Silan wie in einem der Ansprüche 1 bis 4 definiert und mindestens ein styrylfunktionalisiertes Silan wie in einem der Ansprüche 1 bis 4 definiert,
(c) Zusammengeben der Mischungen (A) und (B) und ggf. weiteres Hydrolysieren und Kondensieren der Mischungsbestandteile.

7. Silanharz-Zusammensetzung nach Anspruch 5 oder 6, erhältlich **dadurch**, dass die Hydrolyse- und Kondensationsschritte in einem geeigneten Lösungsmittel erfolgen und nach Abschluss dieser Schritte
(d) das vorhandene Lösungsmittel entfernt oder zumindest teilweise entfernt und/oder zumindest teilweise gegen eine die Protonenleitfähigkeit erhöhende Substanz, insbesondere Imidazol, ausgetauscht wurde.

8. Verfahren zum Herstellen einer Silanharz-Zusammensetzung wie in einem der Ansprüche 1 bis 4 definiert, **gekennzeichnet durch** die folgenden Schritte:
(a) zumindest teilweise erfolgendes Hydrolysieren und Kondensieren einer Mischung (A), bestehend aus oder enthaltend mindestens ein sulfonsäuregruppenhaltiges Silan wie in einem der Ansprüche 1 bis 4 definiert und mindestens ein styrylfuntionalisiertes Silan wie in einem der Ansprüche 1 bis 4 definiert,
(b) zumindest teilweise erfolgendes Hydrolysieren und Kondensieren einer Mischung (B), bestehend aus oder enthaltend mindestens ein einen stickstoffhaltigen Heterocyclus, eine Aminfunktion oder eine Sulfonamidfunktion tragendes Silan wie in einem der Ansprüche 1 bis 4 definiert und mindestens ein styrylfunktionalisiertes Silan wie in einem der Ansprüche 1 bis 4 definiert,
(c) Zusammengeben der Mischungen (A) und (B) und ggf. weiteres Hydrolysieren und Kondensieren der Mischungsbestandteile.

9. Verfahren zum Herstellen einer Silanharz-Zusammensetzung wie in einem der Ansprüche 1 bis 4 definiert, **gekennzeichnet durch** die folgenden Schritte:
(a) zumindest teilweise erfolgendes Hydrolysieren und Kondensieren mindestens eines sulfonsäuregruppenhaltigen Silans wie in einem der Ansprüche 1 bis 4 definiert,
(b) Zugeben mindestens eines styrylfuntionalisierten Silans, wie in einem der Ansprüche 1 bis 4 definiert, und mindestens eines einen stickstoffhaltigen Heterocyclus, eine Aminfunktion oder eine Sulfonamidfunktion tragenden Silans, wie in einem der Ansprüche 1 bis 4 definiert zu dem (Teil-)Hydrolysat/(Teil-)Kondensat gemäß (a) und Fortsetzen der Hydrolyse und Kondensation der Mischungsbestandteile.

10. Verfahren zum Herstellen einer Silanharz-Zusammensetzung nach Anspruch 8 oder 9, **dadurch gekennzeichnet, dass** die Hydrolyse- und Kondensationsschritte in einem polaren Lösungsmittel, vorzugsweise in einem Alkohol, in Gegenwart von Wasser erfolgen, und/oder dass das Wasser in einer unterstöchiometrischen Menge, bezogen auf alle hydrolyseempfindlichen Gruppen in der bzw. den Mischung(en), vorliegt.

11. Verfahren nach Ansprüche 9 oder 10, **dadurch gekennzeichnet, dass** nach Abschluss der Hydrolyse- und Kondensationsschritte
(d) das Lösungsmittel entfernt oder zumindest teilweise entfernt und/oder zumindest teilweise gegen eine die Protonenleitfähigkeit erhöhende Flüssigkeit, insbesondere Imidazol, ausgetauscht wird.

12. Protonenleitfähiges organisch vernetztes Heteropolysiloxan, erhältlich durch die folgenden Schritte:
(a) zumindest teilweise erfolgendes Hydrolysieren und Kondensieren einer Mischung (A), bestehend aus oder enthaltend mindestens ein sulfonsäuregruppenhaltiges Silan wie in einem der Ansprüche 1 bis 4 definiert und mindestens ein styrylfuntionalisiertes Silan wie in einem der Ansprüche 1 bis 4 definiert,
(b) zumindest teilweise erfolgendes Hydrolysieren und Kondensieren einer Mischung (B), bestehend aus oder enthaltend mindestens ein einen stickstoffhaltigen Heterocyclus, eine Aminfunktion oder eine Sulfonamidfunktion tragendes Silan wie in einem der Ansprüche 1 bis 4 definiert und mindestens ein styrylfunktionalisiertes Silan wie in einem der Ansprüche 1 bis 4 definiert,
(c) Zusammengeben der Mischungen (A) und (B) und ggf. weiteres Hydrolysieren und Kondensieren der Mischungsbestandteile, wobei eine Silanharz-Zusammensetzung erhalten wird,
und
(f) Bewirken der organischen Vernetzung zwischen vorhandenen Styrylgruppen.

13. Protonenleitfähiges organisch vernetztes Heteropolysiloxan, erhältlich durch die folgenden Schritte:
(a) zumindest teilweise erfolgendes Hydrolysieren und Kondensieren mindestens eines sulfonsäuregruppenhaltigen Silans wie in einem der Ansprüche 1 bis 4 definiert,
(b) Zugeben mindestens eines styrylfuntionalisierten Silans, wie in einem der Ansprüche 1 bis 4 definiert, und mindestens eines einen stickstoffhaltigen Heterocyclus, eine Aminfunktion oder eine Sulfonamidfunktion tragenden Silans, wie in einem der Ansprüche 1 bis 4 zu dem (Teil-)Hydrolysat/(Teil-)Kondensat gemäß (a) und Fortsetzen der Hydrolyse und Kondensation der Mischungsbestandteile,
und
(f) Bewirken der organischen Vernetzung zwischen vorhandenen Styrylgruppen.

14. Protonenleitfähiges, organisch vernetztes Heteropolysiloxan nach Anspruch 12 oder 13, erhältlich **dadurch**, dass die Hydrolyse- und Kondensationsschritte in einem geeigneten Lösungsmittel erfolgen und nach Abschluss der Hydrolyse- und Kondensationschritte
(d) das Lösungsmittel entfernt oder zumindest teilweise entfernt und/oder zumindest teilweise gegen eine die Protonenleitfähigkeit erhöhende Substanz, insbesondere gegen imidazol, ausgetauscht wird.

15. Protonenleitfähiges, organisch vernetztes Heteropolysiloxan nach Anspruch 13 oder 14, erhältlich **dadurch**, dass man dem Heteropolysiloxan nach der gemäß Schritt (f) bewirkten organischen Vernetzung zwischen vorhandenen Styrylgruppen
(g) die Gelegenheit gegeben hat, eine die Protonenleitfähigkeit erhöhende Flüssigkeit zu absorbieren.

16. Protonenleitfähiges, organisch vernetztes Heteropolysiloxan nach Anspruch 15, **dadurch gekennzeichnet, dass** die die Protonenleitfähigkeit erhöhende Flüssigkeit Wasser ist, das ggf. aus der Gas- oder Dampfphase absorbiert wurde.

17. Protonenleitfähiges, organisch vernetztes Heteropolysiloxan nach einem der Ansprüche 12 bis 16 in Form einer Schicht oder Membran.

## Claims

1. Silane resin composition, obtainable by at least partial hydrolytic condensation at least of the following components:
(1) one or more sulphonic acid group-containing silane(s) having at least one group which can be split off under hydrolytic conditions,
(2) one or more styryl-functionalised silane(s) and
(3) one or more silane(s) which carries/carry a nitrogen-containing heterocycle, an amine function or a sulphonamide function having at least one group which can be split off under hydrolytic conditions, and
mixing of the components before, during or after the hydrolytic condensation.

2. Silane resin composition according to claim 1, wherein
(1) the sulphonic acid group-containing silanes are selected amongst silanes of the Formula (I):
PₐR¹_{b}SiX_{4-a-b} (I)
wherein P has the meaning HOSO₂-R-, R being an aliphatic or aromatic organic radical or includes one such and P is bonded via the latter to silicon, R¹ representing a group which is bonded via carbon to the silicon, X being a hydrolysis-sensitive group, a being 1 or 2, b being 0, 1 or 2 and a+b together being 1, 2 or 3, and/or
(2) the styryl group-containing silanes are selected amongst those of the general Formula (II)
(St)ₐR¹_{b}SiX_{4-a-b} (II)
wherein (St) is a facultatively substituted styryl radical, the radicals R¹ and X being defined as in Formula (I), a meaning 1, 2 or 3, b meaning 0, 1, 2 or 3 and a+b together being 1, 2, 3 or 4, and/or
(3) the at least one silane which carries a nitrogen-containing heterocycle, an amine function or a sulphonamide function are selected amongst such of the general Formula (III)
(Q)ₐR¹_{b}SiX_{4-a-b} (III)
wherein the radicals R¹ and X and the indices a and b are defined as in Formula (I), (Q) is Het-R- or NH₂SO₂-R- or NHR²-R-, R being defined as in Formula (I) above, R² meaning hydrogen or low alkyl and Het being a heterocycle containing nitrogen in the ring.

3. Silane resin composition according to claim 2, wherein at least one of the following radicals and indices in the Formulae (I), (II) or (III) has the following meaning:
(St) is p-vinyl phenyl
Het is a possibly substituted pyrrol, imidazole or dihydroimidazole radical,
R is a possibly substituted alkylene, alkenylene or phenylene group,
R₁ is a substituted alkyl, alkenyl, alkinyl, aryl, alkylaryl or arylalkyl, preferably methyl, ethyl, n- or i-propyl or n-, i- or t-butyl,
X is hydrogen, halogen, alkoxy, aryloxy or NR² with the meaning of R² indicated for Formula (III), thereunder preferably alkoxy and very particularly preferred C₁-C₄ alkoxy,
a is 1, in the case of Formula (II) or also 2
b is 0 or 1.

4. Silane resin composition according to claim 3, wherein
(1) the sulphonic acid group-containing silanes of Formula (I) are selected amongst (ω-sulphonyl)-1-alkyl- or -alkenyl-trialkoxysilanes,
(2) the styryl group-containing silanes of Formula (II) are selected amongst p-vinyl phenyl alkyldialkoxysilanes and
(3) the silanes of Formula (III) which carry at least one nitrogen-containing heterocycle, an amine function or a sulphonamide function are selected amongst N-(trialkoxysilylalkyl or -alkenyl)-4,5-dihydroimidazoles and 2-(trialkoxysilylalkyl- or -alkenyl)imidazoles.

5. Silane resin composition according to one of the preceding claims, obtainable by the following steps
(a) at least partially ensuing hydrolisation and condensation at least of one sulphonic group-containing silane, as defined in one of the claims 1 to 4,
(b) addition at least of one styryl-functionalised silane, as defined in one of the claims 1 to 4, and at least of one silane which carries a nitrogen-containing heterocycle, an amine function or a sulphonamide function, as defined in one of the claims 1 to 4, to the (part) hydrolysate/ (part) condensate according to (a) and continuation of the hydrolysis and condensation of the mixture components.

6. Silane resin composition according to one of the claims 1 to 4, obtainable by the following steps:
(a) at least partially ensuing hydrolysation and condensation of a mixture (A), comprising or containing at least one sulphonic acid group-containing silane, as defined in one of the claims 1 to 4, and at least one styryl-functionalised silane, as defined in one of the claims 1 to 4,
(b) at least partially ensuing hydrolysation and condensation of a mixture (B), comprising or containing at least one silane which carries a nitrogen-containing heterocycle, an amine function or a sulphonamide function, as defined in one of the claims 1 to 4, and at least one styryl-functionalised silane, as defined in one of the claims 1 to 4,
(c) mixing together of the mixtures (A) and (B) and possibly further hydrolysation and condensation of the mixture components.

7. Silane resin composition according to claim 5 or 6, obtainable in that the hydrolysis and condensation steps are effected in a suitable solvent and, after conclusion of these steps,
(d) the solvent present was removed or at least partially removed and/or was exchanged at least partially for a substance which increases the proton conductivity, in particular imidazole.

8. Method for producing a silane resin composition, as defined in one of the claims 1 to 4, **characterised by** the following steps:
(a) at least partially ensuing hydrolysation and condensation of a mixture (A), comprising or containing at least one sulphonic acid group-containing silane, as defined in one of the claims 1 to 4, and at least one styryl-functionalised silane, as defined in one of the claims 1 to 4,
(b) at least partially ensuing hydrolysation and condensation of a mixture (B), comprising or containing at least one silane which carries a nitrogen-containing heterocycle, an amine function or a sulphonamide function, as defined in one of the claims 1 to 4, and at least one styryl-functionalised silane, as defined in one of the claims 1 to 4,
(c) mixing together of the mixtures (A) and (B) and possibly further hydrolysation and condensation of the mixture components.

9. Method for producing a silane resin composition, as defined in one of the claims 1 to 4, **characterised by** the following steps:
(a) at least partially ensuing hydrolysation and condensation at least of one sulphonic group-containing silane, as defined in one of the claims 1 to 4,
(b) addition at least of one styryl-functionalised silane, as defined in one of the claims 1 to 4, and at least one silane which carries a nitrogen-containing heterocycle, an amine function or a sulphonamide function, as defined in one of the claims 1 to 4, to the (part) hydrolysate/(part) condensate according to (a) and continuation of the hydrolysis and condensation of the mixture components.

10. Method for producing a silane resin composition according to claim 8 or 9, **characterised in that** the hydrolysis and condensation steps are effected in a polar solvent, preferably in an alcohol, in the presence of water, and/or **in that** the water is present in a substoichiometric quantity relative to all the hydrolysis-sensitive groups in the mixture or mixtures.

11. Method according to claims 9 or 10, **characterised in that**, after conclusion of the hydrolysis and condensation steps,
(d) the solvent is removed or at least partially removed and/or exchanged at least partially for a liquid which increases the proton conductivity, in particular imidazole.

12. Proton-conductive organically cross-linked heteropolysiloxane, obtainable by the following steps:
(a) at least partially ensuing hydrolysation and condensation of a mixture (A), comprising or containing at least one sulphonic acid group-containing silane, as defined in one of the claims 1 to 4, and at least one styryl-functionalised silane, as defined in one of the claims 1 to 4,
(b) at least partially ensuing hydrolysation and condensation of a mixture (B), comprising or containing at least one silane which carries a nitrogen-containing heterocycle, an amine function or a sulphonamide function, as defined in one of the claims 1 to 4, and at least one styryl-functionalised silane, as defined in one of the claims 1 to 4,
(c) mixing together of the mixtures (A) and (B) and possibly further hydrolysation and condensation of the mixture components, a silane resin composition being obtained,
and
(f) effecting the organic cross-linking between styryl groups which are present.

13. Proton-conductive organically cross-linked heteropolysiloxane, obtainable by the following steps:
(a) at least partially ensuing hydrolysation and condensation at least of one sulphonic acid group-containing silane, as defined in one of the claims 1 to 4,
(b) addition at least of one styryl-functionalised silane, as defined in one of the claims 1 to 4, and at least of one silane which carries a nitrogen-containing heterocycle, an amine function or a sulphonamide function, as defined in one of the claims 1 to 4, to the (part) hydrolysate/ (part) condensate according to (a) and continuation of the hydrolysis and condensation of the mixture components,
and
(f) effecting the organic cross-linking between styryl groups which are present.

14. Proton-conductive, organically cross-linked heteropolysiloxane, according to claim 12 or 13, obtainable in that the hydrolysis and condensation steps are effected in a suitable solvent and, after conclusion of the hydrolysis and condensation steps,
(d) the solvent is removed or at least partially removed and/or exchanged at least partially for a substance which increases the proton conductivity, in particular for imidazole.

15. Proton-conductive, organically cross-linked heteropolysiloxane according to claim 13 or 14, obtainable in that the heteropolysiloxane, after the organic cross-linking, effected according to step (f), between styryl groups which are present
(g) was given the opportunity to absorb a liquid which increases the proton conductivity.

16. Proton-conductive, organically cross-linked heteropolysiloxane according to claim 15, **characterised in that** the liquid which increases the proton conductivity is water which was absorbed possibly from the gas or vapour phase.

17. Proton-conductive, organically cross-linked heteropolysiloxane according to one of the claims 12 to 16, in the form of a layer or membrane.

## Revendications

1. Composition à base de résine silane, pouvant être obtenue par condensation au moins partiellement hydrolytique au moins des constituants ci-dessous :
(1) un ou plusieurs silane(s) contenant un groupe acide sulfonique, et au moins un groupe pouvant être clivé dans des conditions hydrolytiques,
(2) un ou plusieurs silane(s) fonctionnalisé(s) par un groupe styryle, et
(3) un ou plusieurs silane(s) portant un hétérocycle contenant de l'azote, une fonction amine ou une fonction sulfonamide, et au moins un groupe pouvant être clivé dans des conditions hydrolytiques, et
mélange des constituants avant, pendant ou après la condensation hydrolytique.

2. Composition à base de résine silane selon la revendication 1, dans laquelle
(1) on choisit les silanes contenant un groupe acide sulfonique parmi les silanes de formule (I) :
PₐR¹_{b}SiX_{4-a-b} (I)
dans laquelle P signifie HOSO₂-R, R étant ou contenant un radical organique aliphatique ou aromatique, et P étant lié au silicium par celui-ci, R¹ représente un groupe lié au silicium par le carbone, X est un groupe sensible à l'hydrolyse, a vaut 1 ou 2, b vaut 0, 1 ou 2, et a+b ensemble valent 1, 2 ou 3, et/ou
(2) on choisit les silanes contenant un groupe styryle parmi ceux de formule (II)
(St)ₐR¹_{b}SiX_{4-a-b} (II)
dans laquelle (St) est un radical styryle, substitué de manière facultative, les radicaux R¹ et X sont définis comme dans la formue (I), a vaut 1, 2 ou 3, b vaut 0, 1, 2 ou 3, et a+b ensemble valent 1, 2, 3 ou 4, et/ou
(3) on choisit les silanes portant au moins un hétérocycle contenant de l'azote, une fonction amine ou une fonction sulfonamide parmi ceux de formule générale (III)
(Q)ₐR¹_{b}SiX_{4-a-b} (III)
dans laquelle les radicaux R¹ et X et les index a et b sont définis comme dans la formule (I), (Q) est un radical Het-R- ou NH₂SO₂R- ou NHR²R-, R étant défini comme dans la formule (I) ci-dessus, R² représentant un atome d'hydrogène ou un groupe alkyle inférieur et Het étant un hétérocycle contenant de l'azote dans le cycle.

3. Composition à base de résine silane selon la revendication 2,
dans laquelle au moins l'un des radicaux et indices ci-dessous dans les formules (I), (II) respectivement (III) a la signification suivante
(St) est un groupe p-vinylphényle,
Het est un radical pyrrole, imidazole ou dihydroimidazole le cas échéant substitué,
R est un groupe alkylène, alcénylène ou phénylène le cas échéant substitué,
R¹ est un alkyle, alcényle, alkinyle, aryle, alkylaryle ou arylalkyle substitué, de préférence méthyle, éthyle, n ou i-propyle ou n, i ou t-butyle,
X est un atome d'hydrogène, d'halogène, une groupe alcoxy, aryloxy ou NR², ayant la signification de R² indiquée pour la formule (III), dont, de préférence, alcoxy et de manière tout particulièrement préférée alcoxy en C₁ à C₄,
a vaut 1, dans le cas de la formule II, ou bien aussi 2,
b vaut 0 ou 1.

4. Composition à base de résine silane selon la revendication 3,
dans laquelle
(1) on choisit les silanes contenant un groupe acide sulfonique de formule (I) parmi les (ω-sulfonyl)-1-alkyl-ou -alcényl-trialcoxysilanes,
(2) on choisit les silanes contenant un groupe styryle de formule (II) parmi les p-vinylphénylalkyldialcoxysilanes, et
(3) on choisit les silanes de formule (III) portant au moins un hétérocycle contenant de l'azote, une fonction amine ou une fonction sulfonamide parmi les N-(trialcoxysilylalkyl ou -alcényl)-4,5-dihydroimidazoles et les 2-(trialcoxysylylalkyl- ou - alcényl)imidazoles.

5. Composition à base de résine silane selon l'une quelconque des revendications précédentes,
pouvant être obtenue par les étapes suivantes :
(a) hydrolysation et condensation au moins partielles d'au moins un silane contenant un groupe acide sulfonique comme défini dans l'une quelconque des revendications 1 à 4,
(b) addition, à l'hydrolysat (partiel)/condensat (partiel) selon (a), d'au moins un silane fonctionnalisé par un groupe styryle, comme défini dans une quelconque des revendications 1 à 4, et au moins d'un silane portant un hétérocycle contenant de l'azote, une fonction amine ou une fonction sulfonamide, comme défini dans l'une quelconque des revendications 1 à 4, et poursuite de l'hydrolyse et de la condensation des constituants du mélange.

6. Composition à base de résine silane selon l'une quelconque des revendications 1 à 4, pouvant être obtenue par les étapes suivantes :
(a) hydrolysation et condensation au moins partielles d'un mélange (A) constitué ou contenant au moins un silane contenant un groupe acide sulfonique comme défini dans l'une quelconque des revendications 1 à 4 et au moins un silane fonctionnalisé par un groupe styryle comme défini dans l'une quelconque des revendications 1 à 4,
(b) hydrolysation et condensation au moins partielles d'un mélange (B) constitué ou contenant au moins un silane portant un hétérocycle contenant de l'azote, une fonction amine ou une fonction sulfonamide, comme défini dans l'une quelconque des revendications 1 à 4, et au moins un silane fonctionnalisé par un groupe styryle, comme défini dans une quelconque des revendications 1 à 4,
(c) Réunion des mélanges (A) et (B) et, le cas échéant, poursuite de l'hydrolysation et de la condensation des constituants du mélange.

7. Composition à base de résine silane selon la revendication 5 ou la revendication 6,
que l'on peut obtenir en procédant aux étapes d'hydrolyse et de condensation dans un solvant approprié et, à l'issue de ces étapes,
(d) en éliminant le solvant présent ou en l'éliminant au moins partiellement et/ou en le remplaçant au moins partiellement par une substance augmentant la conductivité protonique, en particulier l'imidazole.

8. Procédé de préparation d'une composition à base de résine silane comme définie dans l'une quelconque des revendications 1 à 4,
**caractérisé par** les étapes suivantes :
(a) hydrolysation et condensation au moins partielles d'un mélange (A) constitué ou contenant au moins un silane contenant un groupe acide sulfonique comme défini dans l'une quelconque des revendications 1 à 4 et au moins un silane fonctionnalisé par un groupe styryle comme défini dans l'une quelconque des revendications 1 à 4,
(b) hydrolysation et condensation au moins partielles d'un mélange (B) constitué ou contenant au moins un silane portant un hétérocycle contenant de l'azote, une fonction amine ou une fonction sulfonamide, comme défini dans l'une quelconque des revendications 1 à 4, et au moins un silane fonctionnalisé par un groupe styryle, comme défini dans une quelconque des revendications 1 à 4,
(c) Réunion des mélanges (A) et (B) et, le cas échéant, poursuite de l'hydrolysation et de la condensation des constituants du mélange.

9. Procédé de préparation d'une composition à base de résine silane comme définie dans l'une quelconque des revendications 1 à 4,
**caractérisé par**
les étapes suivantes :
(a) hydrolysation et condensation au moins partielles d'au moins un silane contenant un groupe acide sulfonique comme défini dans l'une quelconque des revendications 1 à 4,
(b) addition, à l'hydrolysat (partiel)/condensat (partiel) selon (a) d'au moins un silane fonctionnalisé par un groupe styryle, comme défini dans l'une quelconque des revendications 1 à 4, et au moins un silane portant un hétérocycle contenant de l'azote, une fonction amine ou une fonction sulfonamide, comme défini dans l'une quelconque des revendications 1 à 4, et poursuite de l'hydrolysation et de la condensation des constituants du mélange.

10. Procédé de préparation d'une composition à base de résine silane selon la revendication 8 ou la revendication 9,
**caractérisé en ce qu'**
on procède aux étapes d'hydrolyse et de condensation dans un solvant polaire, de préférence dans un alcool, en présence d'eau, et/ou
l'eau est présente, dans le ou les mélange(s) dans une quantité sous-stoechiométrique, par rapport à tous les groupes sensibles à l'hydrolyse.

11. Procédé selon les revendications 9 ou 10,
**caractérisé en ce qu'**
à l'issue des étapes d'hydrolyse et de condensation,
(d) on élimine le solvant et/ou on l'élimine au moins partiellement et/ou on le remplace au moins partiellement par un liquide augmentant la conductivité protonique, en particulier l'imidazole.

12. Hétéropolysiloxane à conductivité protonique, réticulé par voie organique, pouvant être obtenu par les étapes suivantes :
(a) hydrolysation et condensation au moins partielles d'un mélange (A) constitué ou contenant au moins un silane contenant un groupe acide sulfonique comme défini dans l'une quelconque des revendications 1 à 4 et au moins un silane fonctionnalisé par un groupe styryle comme défini dans l'une quelconque des revendications 1 à 4,
(b) hydrolysation et condensation au moins partielles d'un mélange (B) constitué ou contenant au moins un silane portant un hétérocycle contenant de l'azote, une fonction amine ou une fonction sulfonamide, comme défini dans l'une quelconque des revendications 1 à 4, et au moins un silane fonctionnalisé par un groupe styryle, comme défini dans l'une quelconque des revendications 1 à 4,
(c) réunion des mélanges (A) et (B) et, le cas échéant, poursuite de l'hydrolysation et de la condensation des constituants du mélange, pour obtenir alors une composition à base de résine silane,
et
(f) induction de la réticulation organique entre des groupes styryle présents.

13. Hétéropolysiloxane à conductivité protonique, réticulé par voie organique, pouvant être obtenu par les étapes suivantes :
(a) hydrolysation et condensation au moins partielles d'au moins un silane contenant un groupe acide sulfonique comme défini dans l'une quelconque des revendications 1 à 4,
(b) addition, à l'hydrolysat (partiel)/condensat (partiel) selon (a), d'au moins un silane fonctionnalisé par un groupe styryle, comme défini dans l'une quelconque des revendications 1 à 4, et au moins un silane portant un hétérocycle contenant de l'azote, une fonction amine ou une fonction sulfonamide, comme défini dans l'une quelconque des revendications 1 à 4, et poursuite de l'hydrolyse et de la condensation des constituants du mélange,
et
(f) induction de la réticulation organique entre des groupes styryle présents.

14. Hétéropolysiloxane à conductivité protonique, réticulé par voie organique selon la revendication 12 ou la revendication 13,
que l'on peut obtenir en procédant aux étapes d'hydrolyse et de condensation dans un solvant approprié et, à l'issue de ces étapes,
(d) on élimine le solvant ou on l'élimine au moins partiellement et/ou on le remplace au moins partiellement par une substance augmentant la conductivité protonique, en particulier l'imidazole.

15. Hétéropolysiloxane à conductivité protonique, réticulé par voie organique selon la revendication 13 ou la revendication 14,
que l'on peut obtenir après la réticulation organique induite selon l'étape (f) entre les groupes styryle présents, (9) en donnant l'occasion à l'hétéropolysiloxane
d'absorber un liquide augmentant la conductivité protonique.

16. Hétéropolysiloxane à conductivité protonique, réticulé par voie organique selon la revendication 15,
**caractérisé en ce que**
le liquide augmentant la conductivité protonique est de l'eau, le cas échéant absorbée à partir de la phase gazeuse ou vapeur.

17. Hétéropolysiloxane à conductivité protonique, réticulé par voie organique selon l'une quelconque des revendications 12 à 16, en forme de couche ou de membrane.
